# EUROPÄISCHE PATENTSCHRIFT

(11) **EP 2 886 886 B1**
(45) Veröffentlichungstag und Bekanntmachung des Hinweises auf die Patenterteilung: **03.04.2019**
(21) Anmeldenummer: 14180488.0
(22) Anmeldetag: 11.08.2014
(51) Int. Cl.: F16C 3/02, F16C 11/06, B21K 1/00, F16C 7/02

(54) **Verbindungsstütze mit Korrosionsschutz**
Connecting rod with corrosion protection
Bielle de raccordement avec protection contre la corrosion

(30) Priorität: 23.12.2013 DE 102013022104
(43) Veröffentlichungstag der Anmeldung: 24.06.2015
(73) Patentinhaber: Mac Panther GmbH, 28199 Bremen (DE)
(72) Erfinder: Kleine, Michael, 28199 Bremen (DE); Kleine, Werner, 28199 Bremen (DE)
(74) Vertreter: Eisenführ Speiser

(56) Entgegenhaltungen:
- EP-A1- 0 174 468
- DE-A1- 10 153 799
- DE-A1-102010 041 791

## Beschreibung

Die Erfindung betrifft eine Verbindungsstütze gemäß dem Oberbegriff des Anspruchs 1.

Vorrichtungen der eingangs beschriebenen Art sind beispielsweise aus der EP 2 181 783 B1 bekannt. Sie werden unter dem Begriff Pendelstützen oder, weil aus mehreren Materialien bestehend, unter der Bezeichnung Hybrid-Pendelstützen oft für Autofahrgestelle eingesetzt. Hierbei müssen die Pendelstützen vorwiegend Zug- und Druckbelastungen aushalten und dieses auch bei Temperaturen von bis zu 80°C. Zusätzlich sind die Verbindungsstützen auch durch Spritzwasser insbesondere bei Regen sehr korrosionsgefährdet, wodurch über die Lebensdauer der Fahrzeuge es zu einem korrosionsbedingten Ausfall der Verbindungsstützen kommen kann. Dem wird üblicherweise dadurch entgegengewirkt, dass die Stange vor dem Umspritzen galvanisch mit einer eine Korrosion verhindernden Beschichtung versehen wird.

Diese galvanische Beschichtung ist in mehrfacher Hinsicht problematisch. Erstens verteuert sie in erheblichem Maße die Stange. Die Beschichtung kostet ein Mehrfaches gegenüber dem Profilieren der Stangenendbereiche. Zweitens muss die Stange zum Erzielen einer guten Beschichtung sehr aufwendig und mit verschiedenen Chemikalien gewaschen werden. Drittens werden aus den galvanischen Bädern Verunreinigungen auf der Stange ausgeschleppt - etwa in Form von Gummiresten - die beim Umspritzen der Stange mit den Koppelteilen zu optischen Fehlstellen führen. Viertens kann die sehr dünne galvanische Schutzschicht etwa durch Steinschlag auf schlechter Wegstrecke so beschädigt werden, dass es zu lokaler Korrosion kommen kann.

Verbindungstützen der eingangs genannten Art sind beispielsweise aus der DE 10 2010 041791 A1 bekannt geworden.

Aufgabe der vorliegenden Erfindung ist es daher, eine Verbindungsstütze der eingangs genannten Art zu verbessern und die vorgenannten Nachteile zu vermeiden. Aufgabe der Erfindung ist es auch die Fertigung einer Verbindungsstütze wirtschaftlicher zu gestalten. Diese Aufgabe wird durch den Gegenstand des unabhängigen Anspruchs 1 gelöst. Bevorzugte Ausführungsformen der Erfindung sind in den Unteransprüchen angegeben. Ausführungsformen der Erfindung zeichnen sich unter anderem dadurch aus, dass die Korrosionsschutzschicht aus einem wasserundurchlässigen Werkstoff der organischen Chemie besteht oder einen solchen Werkstoff aufweist.

Eine bevorzugte Ausführungsform der Erfindung zeichnet sich dadurch aus, dass die Korrosionsschutzschicht aus einem elastischen Werkstoff wie Gummi, Latex oder Kautschuk besteht oder einen solchen elastischen Werkstoff aufweist. Dies beruht auf der Erkenntnis, dass diese Werkstoffe etwa nur 10-20% des spezifischen Gewichtes von Stahl haben, deutlich preiswerter als eine galvanische Beschichtung und zugleich sehr widerstandsfähig gegen Steinschlag sind. In anderen Ausführungsformen der Erfindung weist die Korrosionsschutzschicht Farbe, Lack, Teer und/oder Tauchisolierung auf. Diese können auf die Stange aufgetragen werden nachdem die Koppelteile angebracht sind. Speziell die Tauchisolierung ist besonders geeignet, da ein einfaches Eintauchen in die Isolierflüssigkeit genügt.

Eine weitere bevorzugte Ausführungsform der Erfindung zeichnet sich dadurch aus, dass die Korrosionsschutzschicht aus einem Kunststoff, vorzugsweise aus einem Thermoplast, besteht oder einen Kunststoff, vorzugsweise ein Thermoplast, aufweist. Insbesondere ist bevorzugt, dass die Korrosionsschutzschicht aus einem schlagzähen und/oder elastischen Thermoplast, vorzugsweise einem Polypropylen oder einem thermoplastischen Elastomer - insbesondere wenn dessen Shorehärte zwischen 10°A bis 88°A bzw. 40°D bis 90°D liegt - besteht oder ein solches schlagzähes und/oder elastisches Thermoplast aufweist, wobei ferner vorzugsweise die Koppelteile aus einem anderen Werkstoff, vorzugsweise aus einem Polyamid, bestehen oder einen solchen anderen Werkstoff aufweise. Hierdurch wird den unterschiedlichen Belastungsarten von Korrosionsschutzschicht und Koppelteil Rechnung getragen. Thermoplaste wiegen etwa nur ein Siebtel von Stahl, sind sehr leicht zu verarbeiten und gegenüber mechanischer Belastung widerstandsfähig. Diese Thermoplaste können auch je nach Anwendungsfall etwa durch Glasfaser- oder Kohlefaserbeimischungen verstärkt werden. Im Vergleich zu einer galvanischen Beschichtung sind Thermoplaste deutlich preiswerter.

Eine weitere besonders bevorzugte Ausführungsform der Erfindung zeichnet sich dadurch aus, dass die Korrosionsschutzschicht aus einem Thermoplast zweiteilig ausgebildet ist und jeweils zusammen mit einem Koppelteil ein Teil bildet und die beiden Korrosionsschutz-Koppelteile vorzugsweise etwa in Stangenmitte sich überlappend treffen. In dieser Ausführungsform fällt also ein eigener Arbeitsgang für die Erzeugung der Korrosionsschutzschicht weg.

In einer weiteren bevorzugten Ausführungsform der Erfindung bestehen beide Koppelteile und die Korrosionsschutzschicht aus nur einem Teil. Dieses einteilige Integral-Korrosionsschutz-Koppelteil wird in einer Spritzform und nur einem Arbeitsgang erzeugt. In dieser Version besteht die Verbindungsstütze nur noch aus der Stange und dem Integral-Korrosionsschutz-Koppelteil. Der technische und wirtschaftliche Vorteil ist augenfällig: Viel weniger Arbeitsgänge und viel weniger Fehlermöglichkeiten.

In einer Weiterentwicklung der vorstehenden Ausführungsform der Erfindung verlaufen von dem Integral-Korrosionsschutz-Koppelteil Halteöffnungen zu den Stangenendbereichen der Stange. Diese Halteöffnungen ermöglichen das Fixieren der Stange während des Umspritzens. Sie sind vorteilhaft in einem Bereich angeordnet, welcher später im Einsatz nicht direkt Feuchtigkeit ausgesetzt ist.

Eine bevorzugte Ausführungsform der Erfindung zeichnet sich dadurch aus, dass die Korrosionsschutzschicht eine Mindeststärke von 0,5 mm, vorzugsweise zwischen 1-2mm, hat, wobei ferner Ausführungsformen bevorzugt sind, in denen die die Korrosionsschutzschicht eine Mindeststärke von 0,2mm, vorzugsweise zwischen 0,4 - 1mm, hat. Diese Schichtstärke ist für den erwünschten Korrosionsschutz ausreichend, wiegt wenig und benötigt nur wenig Material, was kostengünstig ist.

Die Erfindung zeichnet sich weiterhin dadurch aus, dass die Korrosionsschutzschicht aus einem Schlauch oder Rohr besteht oder einen Schlauch oder ein Rohr aufweist. Anders ausgedrückt kann die Korrosionsschutzschicht schlauch- oder rohrförmig ausgebildet sein. Ferner ist bevorzugt, dass eine Länge des Schlauches oder Rohres etwa der des mittleren Stangenbereiches entspricht. Ferner ist bevorzugt, dass eine Länge des Schlauches oder Rohres bis an die Profilierungen der Stange reicht. Vor dem Umspritzen der Stangenenden mit den Koppelteilen wird das Rohr oder der Schlauch - der auch ein Schrumpfschlauch sein kann - über die Stange geschoben, wobei die Schlauch- oder Rohrenden von den Koppelteilen teilweise überdeckt werden können. Dieses erlaubt eine einfache Umstellung der Fertigung auf die erfindungsgemäße Ausführung der Verbindungsstütze.

In einer weiteren bevorzugten Ausführungsform weist die Korrosionsschutzschicht eine Querschnittfläche auf, die größer ist als die Querschnittfläche des mittleren Stangenbereichs, vorzugsweise mindestens doppelt so groß. Dabei kann die Korrosionsschutzschicht eine unrunde vorzugsweise rippenförmige Außenkontur aufweisen. Durch einen derartigen Aufbau kann die Korrosionsschutzschicht besonders gut statische Aufgaben übernehmen und z. B. die Verbindungsstütze gegen Ausknicken stärken. Somit können die Stangen der Verbindungsstütze einen kleineren Durchmesser haben, wodurch Gewicht und Kosten gespart werden.

Das beispielhafte Verfahren zur Herstellung einer Verbindungsstütze insbesondere zum Aufnehmen von axialen Zug- und Druckkräften und von Drehmomenten, bestehend aus einer Stange aus Metall mit einer im Wesentlichen prismatischen, vorzugsweise zylinderförmigen Umfangsoberfläche und an beiden Stangenendbereichen angeformten Profilierungen, und zwei Koppelteilen aus Kunststoff oder Leichtmetall, die vorzugsweise durch Umspritzen der Stangenendbereiche mit der Stange verbunden sind und einer Korrosionsschutzschicht um den zwischen den Koppelteilen liegenden mittleren Stangenbereich herum, zeichnet sich dadurch aus, dass die Korrosionsschutzschicht und die Koppelteile auf Kunststoffspritzmaschinen erzeugt werden.

Ein weiteres beispielhaftes Verfahren ist gekennzeichnet durch die Verfahrensschritte
a) Bereitstellen einer Stange,
b) Einlegen der Stange in eine Kunststoffspritzform und Spannen der Stange im mittleren Stangenbereich auf der Stangenumfangsoberfläche mit mindestens einer Spannvorrichtung, vorzugsweise zentrisch mit zwei in der Nähe der Stangenendbereiche angeordneten Spannvorrichtungen,
c) Spritzen der beiden Koppelteile mit einem Kunststoff, vorzugsweise einem Thermoplast,
d) Öffnen der Spannvorrichtung zwischen 20 und 100 Sekunden nach Schritt c,
e) Spritzen der Korrosionsschutzschicht mit einem Kunststoff, vorzugsweise einem Thermoplast,
f) Entfernen der Verbindungsstütze aus der Kunststoffspritzform.

Hierdurch wird in eleganter Weise das Problem gelöst, wie in einer Kunststoffspritzform die Stange geführt werden kann. Dieses Verfahren ist dann bevorzugt, wenn die beiden Koppelteile in der gleichen Trennebene aus der Kunststoffspritzform ausgeformt werden können. Die Kunststoffspritzform kann so ausgebildet sein, dass mehrere Teile gleichzeitig gespritzt werden können.

Vorzugsweise ist bzw. sind die Spannvorrichtung(en) so ausgebildet, dass sie einen Teil der Kunststoffspritzform bildet bzw. bilden. Alternativ oder zusätzlich kann bzw. können die Spannvorrichtung(en) so ausgebildet sein, dass sie beim Spritzen der Koppelteile die Kunststoffspritzform abdichtet bzw. abdichten, vorzugsweise in axialer Richtung zur Stangenmitte hin.

Ein weiteres beispielhaftes Verfahren ist gekennzeichnet durch die Verfahrensschritte
a) Bereitstellen einer Stange,
b) Einlegen der Stange in ein erstes Nest einer Kunststoffspritzform 134 und Spannen der Stange,
c) Spritzen des ersten Koppelteils mit einem Kunststoff, vorzugsweise einem Thermoplast,
d) Entnehmen der Stange aus dem ersten Nest und Einlegen in ein zweites Nest der Kunststoffspritzform,
e) Spritzen des zweiten Koppelteils und anschließend im gleichen Nest
f) Spritzen der Korrosionsschutzschicht mit einem Kunststoff, vorzugsweise einem Thermoplast,
g) Entfernen der Verbindungsstütze aus der Kunststoffspritzform.

Hierdurch wird es möglich auch bei unterschiedlichen Trennebenen der Koppelteile, etwa wenn die Koppelteile gegeneinander verdreht auf der Stange angeordnet sind, diese wirtschaftlich in einer Form zu fertigen. Die Kunststoffspritzform kann auch hier so ausgebildet sein, dass mehrere Teile gleichzeitig gespritzt werden können. Die Handhabung der Stange, also das Einlegen in das erste Nest der Kunststoffspritzform, das Entnehmen und Einlegen in das nächste Nest und die Entnahme der fertigen Verbindungsstütze, kann in bekannter Weise durch Handhabungsroboter oder ähnliche Geräte erfolgen.

Die beispielhaften Verfahren können vorzugsweise dadurch fortgebildet werden, dass das Material, aus dem die Korrosionsschutzschicht gespritzt wird, vorzugsweise ein anderes Material ist als das Material, aus dem die Koppelteile gespritzt sind. Vorzugsweise wird die Korrosionsschutzschicht aus einem Thermoplast, vorzugsweise einem schlagzähen Polypropylen und oder einem thermoplastischen Elastomer, gespritzt, und die Koppelteile werden vorzugsweise aus einem anderen Thermoplast, vorzugsweise aus einem Polyamid, gespritzt.

Die beispielhaften Verfahren und ihre möglichen Fortbildungen weisen Merkmale bzw. Verfahrensschritte auf, die sie insbesondere dafür geeignet machen, eine erfindungsgemäße Verbindungsstütze und ihre Fortbildungen herzustellen. Zu den Vorteilen, Ausführungsvarianten und Ausführungsdetails der beispielhaften Verfahren und ihrer Fortbildungen wird daher auch auf die vorangegangene Beschreibung zu den entsprechenden Vorrichtungsmerkmalen verwiesen.

Im Folgenden werden nun anhand der Zeichnungen bevorzugte Ausführungsformen der Erfindung beschrieben. Dabei werden gleiche, ähnliche oder funktionsgleiche Teile mit den gleichen Bezugszeichen bezeichnet. Die Zeichnung zeigt:
- Figur 1:: eine Seitenansicht einer beispielhaften Verbindungsstütze;
- Figur 2:: eine Seitenansicht einer zweiten beispielhaften Verbindungsstütze;
- Figur 3:: eine Seitenansicht einer dritten beispielhaften Verbindungsstütze;
- Figur 4:: eine Seitenansicht einer vierten beispielhaften Verbindungsstütze;
- Figur 5:: einen vergrößerte Querschnitt der Verbindungsstütze der Figur 4 entlang Linie A-A der Figur 4;
- Figur 6:: eine Seitenansicht einer Ausführungsform einer erfindungsgemäßen Verbindungsstütze;
- Figur 7a-f:: schematische Ansichten der Verfahrensschritte mittels Kunststoffumspritzen.

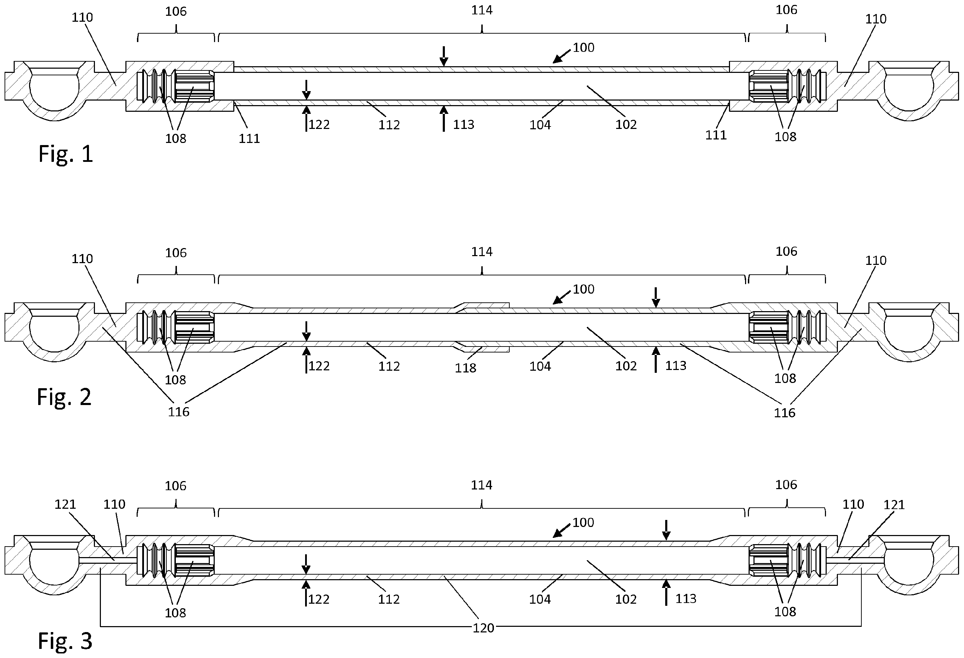

Figur 1 zeigt eine Seitenansicht einer beispielhaften Verbindungstütze 100 mit einer Stange 102, die eine zylinderförmigen Umfangsoberfläche 104 hat und die an beiden Stangenendbereichen 106 Profilierungen 108 aufweist, welche der Befestigung der Koppelteile 110 dienen. Zwischen den Koppelteilen 110 ist die Stange 102 über den gesamten mittleren Stangenbereich 114 mit einer Korrosionsschutzschicht 112 mit der Korrosionsschutzstärke 122 mit einer Mindeststärke von 0,5mm, vorzugsweise mit einer Mindeststärke von 0,2mm, bedeckt. Die Korrosionsschutzschicht 112 besteht aus einem wasserundurchlässigen Werkstoff der organischen Chemie. Im Fall der Figur 1 besteht die Korrosionsschutzschicht 112 aus einer Tauchisolierung oder einem thermoplastischen Kunststoff wie Polypropylen oder einem thermoplastischen Elastomer. Die Kontaktfläche zwischen Koppelteil 110 und Korrosionsschutzschicht 112 ist durch bekannte technische Maßnahmen wie z.B. einem mit Dichtrillen versehenen Bund des Koppelteils über den die Korrosionsschutzschicht ragt, so zu gestalten, dass ein Feuchtigkeitseintritt in diesem Bereich verhindert wird.

Figur 2 zeigt eine Seitenansicht einer zweiten beispielhaften Verbindungsstütze 100. Hier ist die Stange 102 durch zwei einteilige Korrosionsschutz-Koppelteile 116, bestehend aus dem Koppelteil 110 und einem Teil der Korrosionsschicht 112 welcher sich etwas über die Stangenmitte des mittleren Stangenbereiches 114 erstreckt, eingebettet. Die Korrosionsschutz-Koppelteile 116 bestehen aus einem Polyamid, also einem thermoplastischen Material. In Figur 2 wird zunächst das rechtseitige Korrosionsschutz-Koppelteil 116 in einer Kunststoffspritzmaschine mit der Stange 102 verbunden. Anschließend wird die linke Seite der Stange 102 umspritzt. Das linksseitige Korrosionsschutz-Koppelteil 116 ist dabei so geformt, dass es eine Überlappung 118 mit dem rechtseitigen Korrosionsschutz-Koppelteil 116 bildet, um an dieser Nahtstelle ein Eindringen von Feuchtigkeit zu verhindern. Diese Verbindungsstütze der Figur 2 benötigt Spritzformen, die auch auf kleineren Spritzmaschinen verwendet werden können.

Figur 3 zeigt eine Seitenansicht einer dritten beispielhaften Verbindungsstütze 100. Hier ist die Stange 102 durch ein einteiliges Integral-Korrosionsschutz-Koppelteil 120 aus Polyamid, bestehend aus den beiden Koppelteilen 110 und der Korrosionsschicht 112, eingebettet. Diese Verbindungsstütze der Figur 3 benötigt eine große Spritzform, weshalb größere Spritzmaschinen verwendet werden müssen. Durch Halteöffnungen 121, die vom Integral-Korrosionsschutz-Koppelteile 120 zum Stangenendbereich 106 verlaufen, kann die Stange 102 während des Umspritzens fixiert werden. Da die Halteöffnungen 121 in Figur 3 beispielhaft in der Kugelpfanne der Koppelteile 110 enden, sind diese Halteöffnungen während des Einsatzes durch Kugellagerzapfen (nicht dargestellt) abgedeckt. Hierbei ist zu berücksichtigen, dass die Stange 102 fertigungsbedingt einen Rundlauffehler aufweisen kann, der nur mit einer zusätzlichen kostspieligen Richtoperation zu beseitigen wäre. Andererseits wird beim Umspritzen der Stange 102 mit der Korrosionsschutzschicht 112 bedingt durch die exakte Form des Spritzwerkzeugs ein gerades zylinderförmiges Teil erzeugt. Durch die Kombination ungerade Stange 102 und gerade Korrosionsschutzschicht 112 könnte eine Mindestschutzschichtstärke 122 an einigen Stellen unterschritten werden. Dieses ist bei der Wahl des Korrosionsschutzschichtdurchmessers 113 zu berücksichtigen.

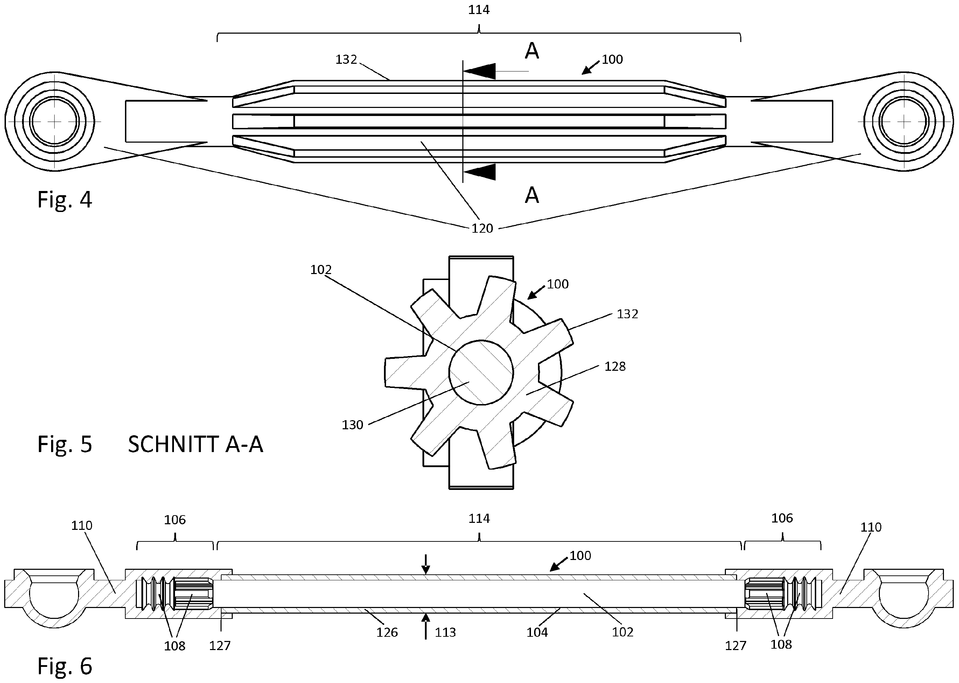

Figur 4 zeigt eine Variante der Verbindungsstütze in Figur 3. Hier ist das Integral- Korrosionsschutz-Koppelteile 120 im mittleren Stangenbereich 114 deutlich verstärkt. Die Außenkontur 132 ist mit Rippen versehen. Diese Formgebung führt zu einer deutlichen Erhöhung der Knicksteifigkeit, weshalb die Stange 102 (hier nicht dargestellt) einen kleineren Durchmesser erhalten kann, wodurch Gewicht eingespart wird.

Figur 5 zeigt einen vergrößerten Querschnitt der Verbindungsstütze 100 der Figur 4 entlang Linie A-A der Figur 4. Die Querschnittfläche 130 des mittleren Stangenbereiches der Stange 102 ist von der Querschnittfläche 128 des Integral-Korrosionsschutz-Koppelteils 120 umgeben. Die rippenförmige unrunde Außenkontur 132 versteift die Verbindungsstange 100 gegen Ausknicken.

Figur 6 zeigt eine Seitenansicht einer Ausführungsform einer erfindungsgemäßen Verbindungsstütze. Der Korrosionsschutz wird hier durch ein Rohr 126 aus Kunststoff, welches vor dem Umspritzen über die Stange 102 geschoben wird, geleistet. Derartige Rohre stehen sehr kostengünstig zur Verfügung, da sie beispielsweise im Extrusionsverfahren in Endloslängen erzeugt werden. Die Enden 127 des Rohres 126 grenzen an die Profilierungen 108 der Stange 102. Die Koppelteile 110 überdecken die Rohrenden 127 der Stange 102. Dieses erfolgt beim Umspritzen der Stange 102 mit den Koppelteilen 110. Je nach Art der Profilierung 108 können anstelle des Umspritzens die Koppelteile z.B. auch durch Aufschrauben auf die Stange 102 montiert werden. Anstelle des Rohres 126 kann auch ein Schlauch (hier nicht dargestellt) verwendet werden.

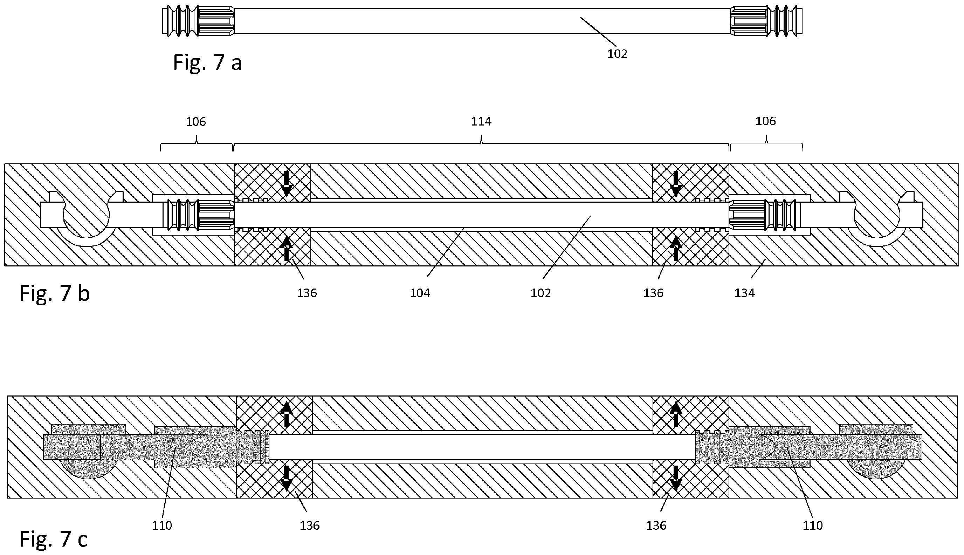

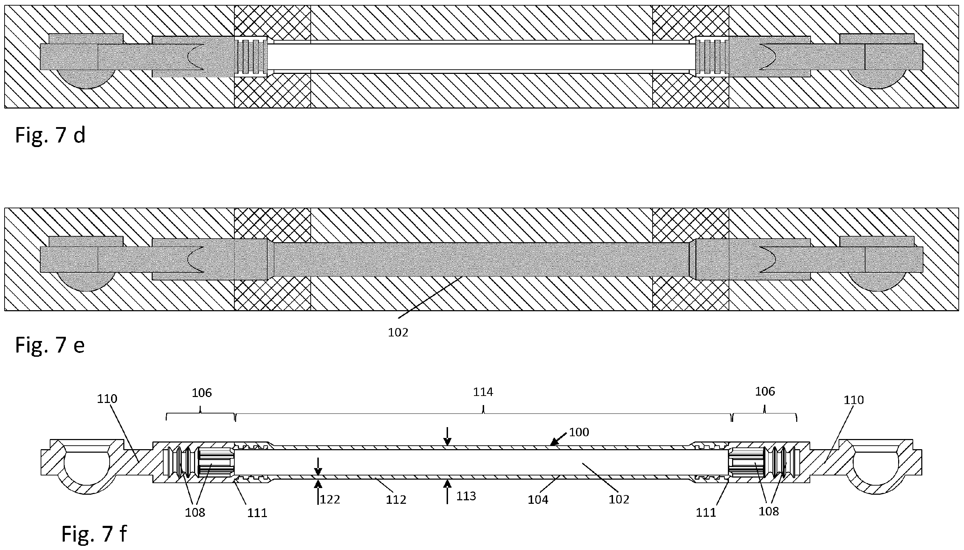

Die Figuren 7a-f zeigen die einzelnen Verfahrensschritte eines beispielhaften Verfahrens zur Fertigung der Verbindungsstütze auf einer Kunststoffspritzmaschine. Figur 7a zeigt die Bereitstellung der Stange 102. In Figur 7b wird die Stange 102 in eine Kunststoffspritzform 134 eingelegt und auf der Stangenumfangsoberfläche 104 mittels zweier Spannvorrichtungen 136, welche in die Kunststoffspritzform 134 integriert sind und welche in der Nähe der Stangenendbereiche 106 angeordnet sind, zentrisch gespannt. In Figur 7c sind die beiden Koppelteile 110 mit einem Thermoplast gespritzt worden wobei der Bereich zum mittleren Stangenbereich 114 durch Abdichtungen (hier nicht gezeigt) freigehalten wird. Hierbei wird gleichzeitig der Dichtbereich 111 zur Korrosionsschutzschicht 112 (hier mit Dichtrillen) gespritzt. Nach dem Spritzen der Koppelteile muss gewartet werden, bis das Thermoplast ausreichend abgekühlt und erstarrt ist, bevor wie in Figur 7d gezeigt die Spannvorrichtungen 136 sich öffnen und die Stange 102 in der Kunststoffspritzform 134 durch die Koppelteile 110 gehalten wird. In Figur 7e wird die Korrosionsschutzschicht 112 zusammen mit der Abdichtung zu den Koppelteilen 110 durch Einspritzen eines Thermoplasts in den freigehaltenen Bereich der Form 134 erzeugt und nach ausreichender Erstarrung der Korrosionsschutzschicht kann die Verbindungsstütze 100 aus der Kunststoffspritzform 134 entfernt werden. Figur 7f zeigt die so hergestellte Verbindungsstütze.

### Bezugszeichen

- 100: Verbindungsstütze
- 102: Stange
- 104: Stangenumfangsoberfläche
- 106: Stangenendbereich
- 108: Profilierungen
- 110: Koppelteil
- 111: Dichtbereich
- 112: Korrosionsschutzschicht
- 113: Korrosionsschutzschichtdurchmesser
- 114: mittlerer Stangenbereich
- 116: Korrosionsschutz-Koppelteil
- 118: Überlappung
- 120: Integral-Korrosionsschutz-Koppelteil
- 121: Halteöffnung
- 122: Korrosionsschutzstärke

- 126: Rohr
- 127: Rohrende
- 128: Querschnittfläche des Integral-Korrosionsschutz-Koppelteils
- 130: Querschnittfläche des mittleren Stangenbereichs
- 132: unrunde Außenkontur
- 134: Kunsststoffspritzform
- 136: Spannvorrichtung

## Patentansprüche

1. Verbindungsstütze (100), insbesondere zum Aufnehmen von axialen Zug- und Druckkräften und von Drehmomenten, mit:
- einer Stange (102) aus Metall mit einer im Wesentlichen prismatischen, Umfangsoberfläche (104) und an beiden Stangenendbereichen (106) angeformten Profilierungen (108); und
- zwei Koppelteilen (110) aus Kunststoff oder Leichtmetall, die vorzugsweise durch Umspritzen der Stangenendbereiche (106) mit der Stange (102) verbunden sind; und
**dadurch gekennzeichnet, dass**
- eine Korrosionsschutzschicht (112) um den zwischen den Koppelteilen (110) liegenden mittleren Stangenbereich (114) herum vorgesehen ist;
- die Korrosionsschutzschicht (112) aus einem wasserundurchlässigen Werkstoff der organischen Chemie besteht oder einen solchen Werkstoff aufweist, und
- die Korrosionsschutzschicht (112) aus einem Schlauch oder Rohr (126) besteht oder einen Schlauch oder ein Rohr aufweist.

2. Verbindungsstütze (100) nach Anspruch 1,
wobei die Korrosionsschutzschicht (112) aus einem elastischen Werkstoff wie Gummi, Latex oder Kautschuk besteht oder einen solchen elastischen Werkstoff aufweist.

3. Verbindungsstütze (100) nach Anspruch 1 oder 2,
wobei die Korrosionsschutzschicht (112) Farbe, Lack, Teer und/oder Tauchisolierung aufweist.

4. Verbindungsstütze (100) nach Anspruch 1,
wobei die Korrosionsschutzschicht (112) aus einem Kunststoff, vorzugsweise aus einem Thermoplast, besteht oder einen Kunststoff, vorzugsweise ein Thermoplast, aufweist.

5. Verbindungsstütze (100) nach mindestens einem der Ansprüche 1, 2 und 4,
wobei die Korrosionsschutzschicht (112) aus einem Thermoplast, vorzugsweise einem schlagzähen Polypropylen und/oder einem thermoplastischen Elastomer, besteht, oder einen solchen Werkstoff aufweist, und die Koppelteile (110) aus einem anderen Werkstoff, vorzugsweise aus einem Polyamid bestehen oder einen solchen anderen Werkstoff aufweisen.

6. Verbindungsstütze (100) nach mindestens einem der Ansprüche 1 und 4,
wobei die Korrosionsschutzschicht (112) zweiteilig ist und jeweils mit einem Koppelteil (110) ein Korrosionsschutz-Koppelteil (116) bildet und sich die beiden Teile vorzugsweise etwa in Stangenmitte (114) in einer Überlappung (118) treffen.

7. Verbindungsstütze (100) nach mindestens einem der Ansprüche 1 und 4,
wobei die Korrosionsschutzschicht (112) und die beiden Koppelteile (110) einteilig ein Integral-Korrosionsschutz-Koppelteil (120) bilden.

8. Verbindungsstütze (100) nach Anspruch 7,
wobei von dem Integral-Korrosionsschutz-Koppelteil (120) Halteöffnungen (121) zu den Stangenendbereichen (106) der Stange (102) verlaufen.

9. Verbindungsstütze (100) nach mindestens einem der vorstehenden Ansprüche,
wobei die Korrosionsschutzstärke (122) eine Mindestdicke von 0,2mm, vorzugsweise zwischen 0,4 - 1mm hat.

10. Verbindungsstütze (100) nach mindestens einem der vorstehenden Ansprüche, wobei, ein Rohr- oder Schlauchende (127) bis an die Profilierungen (108) reicht.

11. Verbindungsstütze (100) nach mindestens einem der vorstehenden Ansprüche,
wobei die Korrosionsschutzschicht (112) eine Querschnittfläche (128) aufweist, die größer ist als die Querschnittfläche (130) des mittleren Stangenbereichs (114), vorzugsweise mindestens doppelt so groß.

12. Verbindungsstütze (100) nach Anspruch 11,
wobei die Korrosionsschutzschicht (112) eine unrunde Außenkontur (132) aufweist, vorzugsweise rippenförmig.

## Claims

1. Connection support (100), in particular for receiving axial pulling and pushing forces and torques, comprising:
- a rod (102) made of metal with a substantially prismatic circumferential surface (104) and profiles (108) formed on both rod end regions (106); and
- two coupling parts (110) made of plastic or light metal, which are preferably connected to the rod (102) by overmoulding the rod end regions (106); and
**characterised in that**
- a corrosion protection layer (112) is provided around the central rod region (114) located between the coupling parts (110);
- the corrosion protection layer (112) consists of a water-impermeable material of organic chemistry or has such a material and
- the corrosion protection layer (112) consists of a hose or tube (126) or has a hose or a tube.

2. Connection support (100) according to Claim 1, wherein the corrosion protection layer (112) consists of an elastic material such as rubber, latex or caoutchouc or consists of such an elastic material.

3. Connection support (100) according to Claim 1 or 2, wherein the corrosion protection layer (112) has paint, lacquer, tar and/or dip insulation.

4. Connection support (100) according to Claim 1, wherein the corrosion protection layer (112) consists of a plastic, preferably of a thermoplastic or has a plastic, preferably a thermoplastic.

5. Connection support (100) according to at least one of Claims 1, 2 and 4, wherein the corrosion protection layer (112) consists of a thermoplastic, preferably a shock-resistant polypropylene and/or a thermoplastic elastomer or has such a material and the coupling parts (110) consist of another material, preferably of a polyamide or have such another material.

6. Connection support (100) according to at least one of Claims 1 and 4, wherein the corrosion protection layer (112) is in two pieces and in each case forms a corrosion protection coupling part (116) with a coupling part (110) and the two parts preferably meet roughly in a rod centre (114) in an overlap (118).

7. Connection support (100) according to at least one of Claims 1 and 4, wherein the corrosion protection layer (112) and the two coupling parts (110) form an integral corrosion protection coupling part (120) in one piece.

8. Connection support (100) according to Claim 7, wherein retention openings (121) run from the integral corrosion protection coupling part (120) to the rod end regions (106) of the rod (102).

9. Connection support (100) according to at least one of the preceding claims, wherein the corrosion protection strength (122) has a minimum thickness of 0.2 mm, preferably between 0.4 to 1 mm.

10. Connection support (100) according to at least one of the preceding claims, wherein a tube or hose end (127) reaches up to the profiles (108).

11. Connection support (100) according to at least one of the preceding claims, wherein the corrosion protection layer (112) has a cross-sectional area (128) which is larger than the cross-sectional area (130) of the central rod region (114), preferably at least twice as large.

12. Connection support (100) according to Claim 11, wherein the corrosion protection layer (112) has a non-round outer contour (132), preferably rib-shaped.

## Revendications

1. Support de raccordement (100), en particulier servant à absorber des forces de traction et de pression axiales et des couples de rotation, avec :
- une tige (102) en métal avec une surface périphérique (104) sensiblement prismatique et des profilages (108) formés au niveau des deux zones d'extrémité de tige (106) ; et
- deux parties de couplage (110) en matière plastique ou en métal léger, qui sont raccordées à la tige (102) de préférence par surmoulage des zones d'extrémités de tige (106), et
**caractérisé en ce que**
- une couche de protection anti-corrosion (112) est prévue tout autour de la zone de tige (114) centrale située entre les parties de couplage (110) ;
- la couche de protection anti-corrosion (112) est constituée d'un matériau imperméable à l'eau de la chimie organique ou présente un matériau de ce type, et
- la couche de protection anti-corrosion (112) est constituée d'un tuyau flexible ou d'un tube (126) ou présente un tuyau flexible ou un tube.

2. Support de raccordement (100) selon la revendication 1,
dans lequel la couche de protection anti-corrosion (112) est constituée d'un matériau élastique tel que de la gomme, du latex ou du caoutchouc ou présente un matériau élastique de ce type.

3. Support de raccordement (100) selon la revendication 1 ou 2,
dans lequel la couche de protection anti-corrosion (112) présente une peinture, un vernis, du goudron et/ou une isolation d'immersion.

4. Support de raccordement (100) selon la revendication 1,
dans lequel la couche de protection anti-corrosion (112) est constituée d'une matière plastique, de préférence d'une matière thermoplastique ou présente une matière plastique, de préférence une matière thermoplastique.

5. Support de raccordement (100) selon au moins l'une quelconque des revendications 1, 2 et 4,
dans lequel la couche de protection anti-corrosion (112) est constituée d'une matière thermoplastique, de préférence d'un polypropylène résistant aux chocs et/ou d'un élastomère thermoplastique, ou présente un matériau de ce type, et les parties de couplage (110) sont constituées d'un autre matériau, de préférence d'un polyamide ou présentent un autre matériau de ce type.

6. Support de raccordement (100) selon au moins l'une quelconque des revendications 1 et 4,
dans lequel la couche de protection anti-corrosion (112) est en deux parties et forme respectivement avec une partie de couplage (110) une partie de couplage de protection anti-corrosion (116) et les deux parties se rencontrent en un chevauchement (118) de préférence à peu près au centre de la tige (114).

7. Support de raccordement (100) selon au moins l'une quelconque des revendications 1 et 4,
dans lequel la couche de protection anti-corrosion (112) et les deux parties de couplage (110) forment une partie de couplage de protection anti-corrosion intégrale (120) en une partie.

8. Support de raccordement (100) selon la revendication 7,
dans lequel des ouvertures de maintien (121) s'étendent depuis la partie de couplage de protection anti-corrosion intégrale (120) vers les zones d'extrémité de tige (106) de la tige (102).

9. Support de raccordement (100) selon au moins l'une quelconque des revendications précédentes, dans lequel l'épaisseur de protection anti-corrosion (122) a une épaisseur minimale de 0,2 mm, de préférence comprise entre 0,4-1 mm.

10. Support de raccordement (100) selon au moins l'une quelconque des revendications précédentes,
dans lequel une extrémité de tube ou de tuyau flexible (127) atteint les profilages (108).

11. Support de raccordement (100) selon au moins l'une quelconque des revendications,
dans lequel la couche de protection anti-corrosion (112) présente une surface de section transversale (128), qui est plus grande que la surface de section transversale (130) de la zone de tige centrale (114), de préférence au moins deux fois plus grande.

12. Support de raccordement (100) selon la revendication 11,
dans lequel la couche de protection anti-corrosion (112) présente un contour extérieur (132) non rond, de préférence de forme nervurée.
